Europäisches Patentamt

European Patent Office

Office européen des brevets

(19)

(11) Publication number: 0 241 955
A1

# (12) EUROPEAN PATENT APPLICATION

(21) Application number: 87200340.5

(22) Date of filing: 26.02.87

(51) Int. Cl.⁴: G 02 B 6/42, H 01 L 33/00

(30) Priority: 17.03.86 NL 8600674

(43) Date of publication of application: 21.10.87
Bulletin 87/43

(84) Designated Contracting States: DE FR GB IT SE

(71) Applicant: N.V. Philips' Gloeilampenfabrieken,
Groenewoudseweg 1, NL-5621 BA Eindhoven (NL)

(72) Inventor: Kock, Hendrikus Gerardus, c/o Int.
Octrooibureau B.V. Prof. Holstlaan 6, NL-5656 AA
Eindhoven (NL)
Inventor: Van Leest, Johannes Henricus Franciscus
Maria, c/o Int. Octrooibureau B.V. Prof. Holstlaan 6,
NL-5656 AA Eindhoven (NL)
Inventor: Khoe, Giok Djan, c/o Int. Octrooibureau B.V.
Prof. Holstlaan 6, NL-5656 AA Eindhoven (NL)

(74) Representative: Veenstra, Gustaaf, INTERNATIONAAL
OCTROOIBUREAU B.V. Prof. Holstlaan 6, NL-5656 AA
Eindhoven (NL)

(54) Coupler for an optical fibre with an opto-electronic element, in a hermetically sealed housing, and method of manufacturing it.

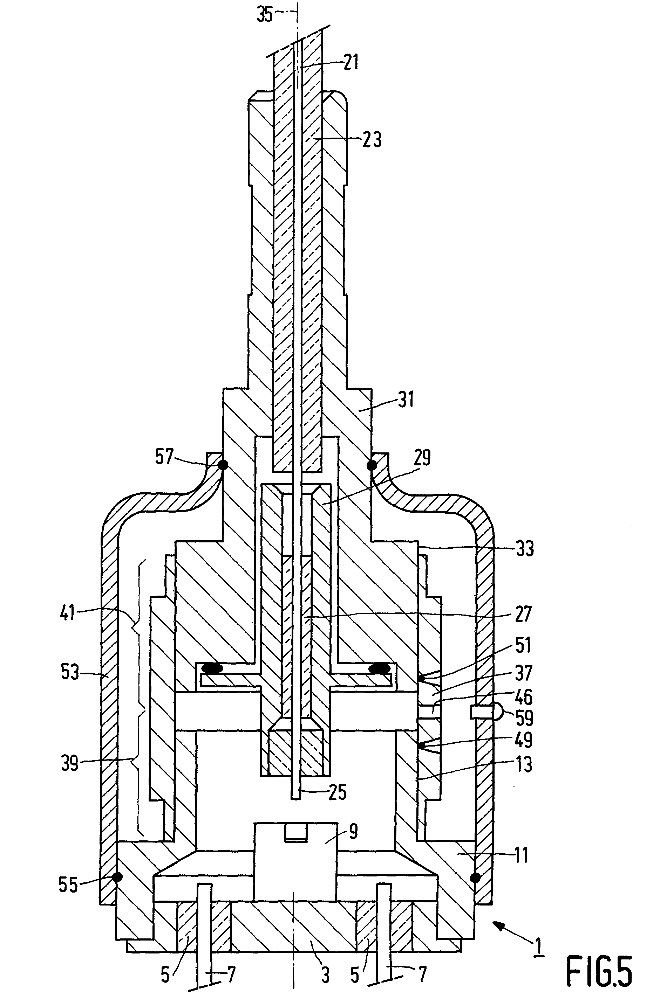

(57) The light source (9) is fixed in a base section (1) which is provided with a cylindrical first reference surface (13) the axis (15) of which coincides with the axis of a light beam emitted by the light source. An end section of the optical fibre (21) located close to the free end (25) is fixed in an envelope (31) which is provided with a cylindrical second reference surface (33), the axis (35) of which coincides with the axis of the core of the fibre. A coupling element (37) is manufactured, comprising two cavities (39 and 41, respectively) which are positioned coaxially one behind the other and connected to each other, in which the first and the second reference surfaces (13 and 33, respectively) are inserted substantially free from play, in such a way that the light source (9) is optically coupled with the free end (25) of the fibre (21). Next, the positions of the base section (1) and the envelope (31) in the coupling element (37) are fixed and the formed assembly is hermetically sealed. (Figure 5)

"An assembly consisting of a hermetically sealed housing with an opto-
electronic light source and an optical fibre and a method for its manu-
facture"

TITLE MODIFIED
see front page

The invention relates to an assembly comprising a hermetically
sealed housing, containing an opto-electronic light source and a free
end of an optical fibre extending to outside the housing and being optically coupled to the light source, the light source being fixed into a
base section of the housing and the free end of the optical fibre being
positioned opposite the light source in such a way that the axis of a
light beam emitted by the light source and the axis of the core of the
optical fibre essentially coincide. The invention also relates to a
method for the manufacture of an assembly comprising a hermetically
sealed housing, containing an opto-electronic light source and a free
end of an optical fibre extending to outside the housing and being optically coupled to the light source, the light source being fixed into a
base section of the housing and the free end of the optical fibre being
positioned opposite the light source in such a way that the axis of a
light beam emitted by the light source and the axis of the core of the
fibre essentially coincide, after which the mutual positions of the
light source and the fibre are fixed and the housing is hermetically
sealed.

An assembly and a method of the kind mentioned in the preamble
are known from, for example, GB-A-2 022 280. The opto-electronic light
source can, for example, be a light-emitting semiconductor diode or a
laser. In order to achieve a long life for such opto-electronic light
sources it is important for the latter to be able to operate in a hermetically sealed space which, for preference, is evacuated or filled with
an inert gas. This space is formed by the housing which must be provided with a lead-through for the optical fibre because the free end of
the fibre must be brought very close to (for example to about 10 μm
from) the active surface of the light source in order to achieve a
satisfactory optical coupling between the light source and the fibre.
During the manufacture of the known assembly the fibre is led through an
aperture in the wall of the housing, which aperture is sealed with the aid of a material which melts at high temperature, such as a solder or a glass with a low melting point. The fibre is now moved with respect to the light source until an optimum coupling is obtained and then the temperature is allowed to drop so that the material solidifies, thus fixing the fibre in the required position and sealing the aperture hermetically. This method is relatively complicated and time-consuming and while the material is setting the positioning of the optical fibre can easily be disturbed.

It is an object of the invention to indicate an assembly of the kind mentioned in the preamble, in which the optical fibre and the light source can be positioned extremely easily with respect to each other and the hermetic sealing of the housing can no longer disturb this positioning.

For this purpose, the assembly according to the invention is characterised in that

a) the base section comprises a cylindrical first reference surface, the axis of which coincides with the axis of a light beam emitted by the light source;

b) an end section of the optical fibre located close to the free end is fixed in an envelope that comprises a cylindrical second reference surface, the axis of which coincides with the axis of the core of the optical fibre;

c) a coupling element is present with two cavities positioned coaxially one behind the other and connected to each other, the diameter of the inscribed circle of the first cavity being substantially the same as the diameter of the first reference surface and the diameter of the inscribed circle of the second cavity being substantially the same as the diameter of the second reference surface;

d) the base section and the envelope are fixed with their reference surfaces in the first and the second cavity, respectively, in such a way that the light source is optically coupled with the free end of the optical fibre.

It is a further object of the invention to indicate a method of the kind mentioned in the preamble, in which the positioning of the light source and the optical fibre takes place in a number of independent, simple steps and in which the hermetic sealing of the housing can virtually no longer disturb this positioning.

For this purpose, the method according to the invention is characterised in that

a) the base section, after the light source has been fixed in it, is provided with a cylindrical first reference surface, the axis of which coincides with the axis of a light beam emitted by the light source;

b) an end section of the optical fibre located close to the free end is fixed in an envelope which is provided with a cylindrical second reference surface, the axis of which coincides with the axis of the core of the optical fibre;

c) a coupling element with two cavities positioned coaxially one behind the other and connected to each other is manufactured, the diameter of the inscribed circle of the first cavity being substantially the same as the diameter of the first reference surface and the diameter of the inscribed circle of the second cavity being substantially the same as the diameter of the second reference surface;

d) the reference surfaces of the base section and the envelope are placed in the first and the second cavity, respectively, in such a way that the light source is optically coupled to the free end of the fibre, after which the positions of the base section and the envelope in the coupling element are fixed and the formed assembly is hermetically sealed.

Since the light source and the core of the optical fibre are each separately centred with respect to the cylindrical reference surface of the base section and the envelope, respectively, and since both these cylindrical surfaces are next accurately fixed coaxially into the coupling element, positioning has become very easy and the mutual positions can no longer easily be disturbed.

After the positions of the base section and the envelope have been fixed these components can be hermetically connected to the coupling element. The wall of the coupling element then also forms a part of the wall of the housing.

Another possibility for hermetically sealing the housing is obtained by the fact that after the positions of the base section and the envelope have been fixed, a housing wall is placed around the coupling element, which is next hermetically connected to the base section and the envelope. An assembly manufactured in this way is characterised in that a housing wall surrounding the coupling element is present which is hermetically connected to the base section and the envelope.

The invention will now be explained in further detail on the basis of the drawing, in which:

Fig. 1 is a longitudinal cross-section of an embodiment of a base section of a housing for an assembly according to the invention,

Fig. 2 is a longitudinal cross-section of an example of an embodiment of an envelope with an optical fibre for an assembly according to the invention,

Fig. 3 is a longitudinal cross-section of an embodiment of a coupling element for an assembly according to the invention,

Fig. 4 is a longitudinal cross-section of a first embodiment of an assembly according to the invention, in which the components shown in figs. 1 to 3 inclusive are incorporated and

Fig. 5 is a longitudinal cross-section of a second embodiment of an assembly according to the invention.

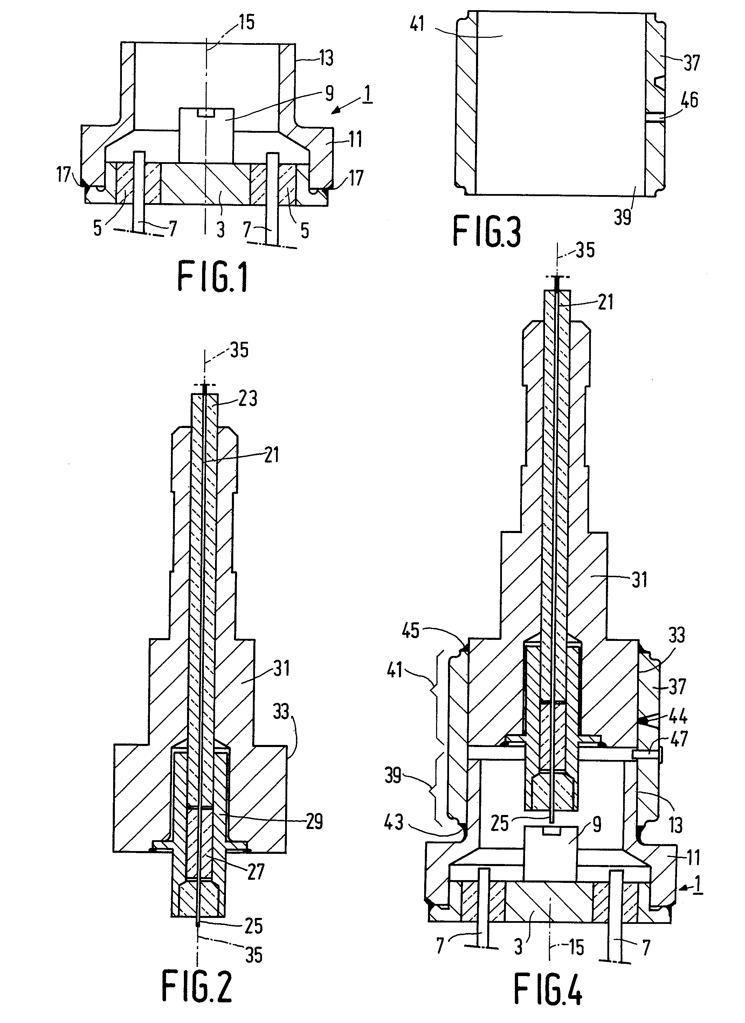

The base section shown in fig. 1 comprises a metal carrier 3 in which glass lead-throughs 5 with connecting pins 7 are fixed. An opto-electronic light source 9, for example a light-emitting semiconductor diode or a laser, is fixed to the carrier 3. The light source 9 is electrically connected with the connection pins 7 by wires not shown. The base section 1 also comprises a tubular section 11 placed on the carrier 3 which surrounds the light source 9 and which comprises a first reference surface 13 in the form of a cylinder, the axis 15 of which coincides with the axis of a light beam emitted by the light source. This surface can, for example, be obtained by means of an operation as described in US-A-4 298 374 (PHN 9235), in which respect the light beam emitted by the light source 9 can be used for the necessary formation of an image consisting of two circles. There are also other known methods for positioning the first reference surface 13 and the light source 9 with respect to each other. The light source 9 and the tubular section 11 which has previously been provided with a cylindrical surface 13 can, for example, be observed simultaneously through a microscope while the tubular section is moved with respect to the carrier until the said surface is accurately coaxial with the light beam emitted by the light source. In this position the tubular section 11 is connected securely to the carrier 3, for example by a welded joint 17 which at the same time provides a hermetic seal between the carrier and the tubular section.

Fig. 2 shows a longitudinal cross-section of an end section of an optical fibre 21, which in the known manner can consist of a light-conducting core of glass with a relatively high refraction index surrounded by a glass cladding with a relatively low refraction index. The fibre 21 is surrounded by a protective layer 23 which is removed over a section of the fibre close to the free end 25. This section of the fibre 21 extends through a capillary 27, for example made of quartz, which is fixed by means of an adapter bush 29 in an envelope 31, which surrounds the end section of the fibre 21. All the transitions (fibre-capillary, capillary-adapter bush and adapter bush-envelope) are hermetically sealed. The envelope 31 comprises a second reference surface 33 in the form of a cylinder, the axis 35 of which coincides with the axis of the core of the optical fibre 21. This surface, too, can be obtained by means of the method described in US-A-4 298 374, or in another known way.

Fig. 3 shows a longitudinal cross-section of an embodiment of a coupling element 37 with two cavities 39 and 41 positioned coaxially one behind the other and connected to each other. The diameter of the inscribed circle of the first cavity 39 is substantially the same as the diameter of the first reference surface 13 of the base section 1 and the diameter of the inscribed circle of the second cavity 41 is substantially the same as the diameter of the second reference surface 33 of the envelope 31. In the shown embodiment the inscribed circles of the two cavities 39 and 41, as well as the reference surfaces 13 and 33, are of the same diameter. This has the advantage that the two cavities 39 and 41 can be made in one operation, which is relatively cheap and offers the certainty that both cavities are precisely coaxial. The cavities 39 and 41 in this embodiment are cylindrical in shape so that they can be made in the coupling element 37 in a simple manner, for example by drilling. In this case the inscribed circle of each cavity - 39 and 41 follows the inner surface of these cavities over the entire circumference. It is, however, also possible to use polygonal, for example triangular, cavities 39 and 41, in which respect the inscribed circle touches the circumference of the cavity at only a few points.

The two cavities 39 and 41 can also have inscribed circles of different diameters.  The diameters of the two reference surfaces 13 and 33 must then, of course, also be different.

In fig. 4 it can be seen how the base section 1, the envelope- 31 and the coupling element 37 can be combined to form an assembly.  The base section 1 is pushed with its first reference surface 13 into the first cavity 39 of the coupling element 37 until the carrier 3 connects with the bottom rim of the coupling element and is fixed there, for example by means of a hermetic welded joint 43 running along the entire circumference.  In an analogous manner, the second reference surface 33 of the envelope 31 is pushed into the second cavity 41, the optical coupling between the light source 9 and the free end 25 of the fibre 21 being continuously monitored by measuring the quanitity of light emerging at the other end of the fibre (not drawn), while the light source 9 is in operation.  When this quantity is maximum, the position of the envelope 31 is fixed in the coupling element 37, for example by means of one or more spot-welded joints 44.  The two reference surfaces fit into the cavities substantially free from play.  Since the axis of the light beam emitted by the light source 9 coincides with the axis 15 of the first reference surface 13, while the axis of the optical fibre - 21 coincides with the axis 35 of the second reference surface 33, and since the axes of both these reference surfaces are accurately positioned in line with each other by the coupling element 37, the fibre can capture and guide a maximum quantity of the light emitted by the light source.  Finally, the envelope 31 is hermetically secured to the coupling element 37 by means of a welded joint 45 which runs along the top end of the coupling element around its entire circumference.  The welded joints ensure that the base section 1, the envelope 31 and the coupling element 37 together form a hermetically sealed housing that can be filled with an inert gas or be evacuated if required.  For this purpose, an aperture 46 is made in the wall of the coupling element (see fig. 3) which is hermetically sealed by welding a metal pin 47 securely into it after evacuation and/or filling with inert gas.

Fig. 5 shows a longitudinal cross-section of a second an embodiment of an assembly according to the invention which differs in some respects from the embodiment shown in fig. 4.  Corresponding parts are indicated by the same reference figures as in figs. 1 to 4. The coupling element 37 in this case is not provided with a stop 43. The base section 1 is pushed into the first cavity 39 until the carrier 3 connects with the bottom rim of the coupling element 37 and is there secured with, for example, one or more spot-welded joints 49. Next, the envelope 31 is pushed into the second cavity 41, the correct axial position being determined in the same manner as described on the basis of fig. 4. In this position the envelope 31 is fixed into the coupling element 37, for example, with one or more spot-welded joints 51. The sole purpose of the welded joints 49 and 51 is to prevent axial displacement of the base section 1 and the envelope 31, respectively. They need not constitute a hermetic seal, since a housing wall 53 is placed around the coupling element 37, which is then hermetically connected to the base section 1 and the envelope 31, for example by welded joints 55 and 57. For the purpose of evacuating and/or filling the housing formed in this way with a suitable gas an aperture 46 is again provided in the wall of the coupling element 37, an aperture which is later sealed with a metal pin 59 being provided in the housing wall 53.

1.      An assembly comprising a hermetically sealed housing, containing an opto-electronic light source and a free end of an optical fibre extending to outside the housing and being optically coupled to the light source, the light source being fixed into a base section of the housing and the free end of the optical fibre being positioned opposite the light source in such a way that the axis of a light beam emitted by the light source and the axis of the core of the optical fibre essentially coincide, characterised in that

        a) the base section comprises a cylindrical first reference surface the axis of which coincides with the axis of a light beam emitted by the light source;

        b) an end section of the optical fibre located close to the free end is fixed in an envelope that comprises a cylindrical second reference surface, the axis of which coincides with the axis of the core of the optical fibre;

        c) a coupling element is present with two cavities positioned coaxially one behind the other and connected to each other, the diameter of the inscribed circle of the first cavity being substantially the same as the diameter of the first reference surface and the diameter of the inscribed circle of the second cavity being substantially the same as the diameter of the second reference surface;

        d) the base section and the envelope are fixed with their reference surfaces in the first and the second cavity, respectively, in such a way that the light source is optically coupled with the free end of the optical fibre.

2.      An assembly as claimed in claim 1, characterised in that the first and the second cavity in the coupling element are cylindrical.

3.      An assembly as claimed in claim 1 or 2, characterised in that the diameters of the reference surfaces of the base section and the envelope are equal.

4.      An assembly as claimed in any one of the claims 1 to 3, characterised in that the base section and the envelope are connected to the coupling element by hermetic connections.

5.      An assembly as claimed in any one of the claims 1 to 3 inclusive, characterised in that a housing wall surrounding the coupling element is present, which is hermetically connected to the base section and the envelope.

6.      A method for the manufacture of an assembly comprising a hermetically sealed housing, containing an opto-electronic light source and a free end of an optical fibre extending to outside the housing and being optically coupled to the light source, the light source being fixed in a base section of the housing and the free end of the optical fibre being positioned opposite the light source in such a way that the axis of a light beam emitted by the light source and the axis of the core of the fibre essentially coincide, after which the mutual positions of the light source and the fibre are fixed and the housing is hermetically sealed, characterised in that

a) the base section, after the light source has been fixed in it, is provided with a cylindrical first reference surface, the axis of which coincides with the axis of a light beam emitted by the light source;

b) an end section of the optical fibre located close to the free end is fixed in an envelope which is provided with a cylindrical second reference surface, the axis of which coincides with the axis of the core of the optical fibre;

c) a coupling element with two cavities positioned coaxially one behind the other and connected to each other is manufactured, the diameter of the inscribed circle of the first cavity being substantially the same as the diameter of the first reference surface and the diameter of the inscribed circle of the second cavity being substantially the same as the diameter of the second reference surface;

d) the reference surfaces of the base section and the envelope are placed in the first and the second cavity, respectively, in such a way that the light source is optically coupled to the free end of the fibre, after which the positions of the base section and the envelope in the coupling element are fixed and the formed assembly is hermetically sealed.

7.      A method as claimed in claim 6, characterised in that after the positions of the base section and the envelope have been fixed, a housing wall is placed around the coupling element which is next hermetically connected with the base section and the envelope.

0 241 955

1/2

FIG.1

FIG.2

FIG.3

FIG.4

1-Ⅱ- PHN 11679

FIG.5

2-Ⅱ-PHN 11679

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 5, no. 44 (E-50)[716], 24th March 1981; & JP-A-55 166 974 (HITACHI SEISAKUSHO K.K.) 26-12-1980 * Figure; abstract * | 1-4 | G 02 B 6/42 H 01 L 33/00 |
| | --- | | |
| Y | Idem | 6 | |
| | --- | | |
| X | EP-A-0 050 051 (THOMSON-CSF) * Figures 1-4; abstract; page 3, lines 18-25,30-33; page 4, lines 6-14,15-33; page 5, lines 6-10,16-24,29-34; page 6, lines 1-5 * | 1-4 | |
| Y | | 6 | TECHNICAL FIELDS SEARCHED (Int. Cl.4) |
| A | | 5,7 | G 02 B H 01 L |
| | --- | | |
| A | PATENT ABSTRACTS OF JAPAN, vol. 6, no. 22 (P-101)[900], 9th February 1982; & JP-A-56 143 405 (NIPPON DENSHIN DENWA KOSHA) 09-11-1981 * Figures; abstract * | 1-4,6 | |
| | --- -/- | | |

The present search report has been drawn up for all claims

| Place of search | Date of completion of the search | Examiner |
|---|---|---|
| THE HAGUE | 11-06-1987 | VAN DOREMALEN,J.C.H. |

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | REVIEW OF THE ELECTRICAL COMMUNICATION LABORATORIES, vol. 33, no. 3, May 1985, pages 519-527, The Research and Development Headquarters, Tokyo, JP; N. KOJIMA et al.: "Studies on submarine optical fiber cable structure and transmission line configuration" <br> * Figures 1,2; page 519, column 2, lines 3-10,29-35; page 520, column 2, lines 10-25 * <br><br> ----- | 5,7 | |
| | | | TECHNICAL FIELDS SEARCHED (Int. Cl.4) |

| The present search report has been drawn up for all claims | | |
|---|---|---|
| Place of search | Date of completion of the search | Examiner |
| THE HAGUE | 11-06-1987 | VAN DOREMALEN,J.C.H. |